# EUROPEAN PATENT APPLICATION

(11) **EP 4 151 979 A2**
(43) Date of publication of application: **22.03.2023**
(21) Application number: 22216736.3
(22) Date of filing: 27.12.2022
(51) Int. Cl.: G01M 17/06, G06F 11/36

(54) **TEST METHOD AND TEST APPARATUS FOR AUTOMATIC DRIVING, AND STORAGE MEDIUM**

(30) Priority: 28.12.2021 CN 202111626623
(71) Applicant: Apollo Intelligent Connectivity (Beijing) Technology Co., Ltd., Beijing 100176 (CN)
(72) Inventor: ZHAO, Jun, Beijing, 100176 (CN); CHEN, Chen, Beijing, 100176 (CN)
(74) Representative: Maiwald GmbH

(57) **Abstract**

Aspects of the present invention are directed to a test method for automatic driving, including: obtaining driving data of an automatic driving vehicle; determining at least one driving scene contained in the driving data according to the driving data and a preset scene analysis strategy, each of the at least one driving scene including at least one type of indicator parameter information; and testing the automatic driving vehicle according to respective types of indicator parameter information in the at least one driving scene.

## Description

### TECHNICAL FIELD

The present invention relates to the technical field of data processing, in particular to the technical field of automatic driving, specifically to a test method and a test apparatus for automatic driving, an electronic device, and a storage medium.

### BACKGROUND

A road test of automatic driving provides the most direct and realest test approach to verify the automatic driving ability of automatic driving vehicles in real traffic flow and scenes. It is an important part of automatic driving test, and forms a complete test chain with simulation test and closed field test.

In order to get the test results, multiple test vehicles are needed to pass circularly through a same place according to the location of a scene to be tested, and a scene of passing through the place is recorded. When the scene meets special test requirements, it will be recorded as a valid test scene. Performances of vehicle versions are observed under the valid test scene. Usually, it needs a lot of tests to accumulate the number of valid scenes that meet the requirements, so as to get an effective test conclusion. This method has high test cost and complex test process, and cannot realize a test of the automatic driving vehicle on the real road.

### SUMMARY

The present invention provides a test method and a test apparatus for automatic driving, a storage medium, and a computer program product.

According to an aspect of the present invention, there is provided a test method for automatic driving, including: obtaining driving data of an automatic driving vehicle; determining at least one driving scene contained in the driving data according to the driving data and a preset scene analysis strategy, each of the at least one driving scene including at least one type of indicator parameter information; and testing the automatic driving vehicle according to respective types of indicator parameter information in the at least one driving scene.

Optionally, determining the at least one driving scene contained in the driving data according to the driving data and the preset scene analysis strategy includes: analyzing the driving data to obtain path information, vehicle control information and obstacle information; determining scene start time, scene end time and obstacle information in the at least one driving scene according to the path information, vehicle control information, obstacle information and preset scene analysis strategy; and determining the at least one driving scene in the driving data based on the scene start time, the scene end time, and the obstacle information.

Optionally, testing the automatic driving vehicle according to the respective types of indicator parameter information in the at least one driving scene includes: determining a scene category of each type of indicator parameter information in the at least one driving scene, in which the scene category is related to at least one of vehicle speed, passing rate/passing duration, distance to obstacle, and lane; determining a target calculation method of the indicator parameter information according to the scene category; and testing the automatic driving vehicle based on the target calculation method.

Optionally, after testing the automatic driving vehicle according to the respective types of indicator parameter information in the at least one driving scene, the method further includes: generating data groups based on the at least one driving scene and corresponding test results, in which the data groups are stored according to a driving scene dimension; analyzing at least two data groups, and determining the driving scenes of which a number of occurrence exceeds a preset threshold as target driving scenes, the target driving scenes include at least two driving scenes; and determining a difference between the test results respectively corresponding to the target driving scenes.

Optionally, determining the difference between the test results respectively corresponding to the target driving scenes includes: determining the difference between the test results respectively corresponding to the target driving scenes based on different driving system versions; or determining the difference between the test results respectively corresponding to the target driving scenes based on different cities.

According to another aspect of the present invention, there is provided a test apparatus for automatic driving , including: an obtaining unit, configured to obtain driving data of an automatic driving vehicle; a first determining unit, configured to determine at least one driving scene contained in the driving data according to the driving data and a preset scene analysis strategy, each of the least one driving scene including at least one type of indicator parameter information; and a testing unit, configured to test the automatic driving vehicle according to respective types of indicator parameter information in the at least one driving scene.

Optionally, the first determining unit includes: an obtaining module, configured to analyze the driving data to obtain path information, vehicle control information and obstacle information; a first determining module, configured to determine scene start time, scene end time and obstacle information in the at least one driving scene according to the path information, vehicle control information, obstacle information and preset scene analysis strategy; and a second determining module, configured to determine the at least one driving scene in the driving data based on the scene start time, the scene end time, and the obstacle information.

Optionally, the testing unit includes: a first determining module, configured to determine a scene category of each type of indicator parameter information in at least one driving scene, in which the scene category is related to at least one of vehicle speed, passing rate/passing duration, distance to obstacle, and lane; a second determining module, configured to determine a target calculating apparatus of the indicator parameter information according to the scene category; and a testing module, configured to test the automatic driving vehicle based on the target calculating apparatus.

Optionally, the apparatus includes: a storing unit, configured to, after the testing unit tests the automatic driving vehicle according to the respective types of indicator parameter information in the at least one driving scene, generate data groups based on the at least one driving scene and corresponding test results, and store the data groups according to a driving scene dimension; a processing unit, configured to analyze at least two data groups, and determine the driving scenes of which a number of occurrence exceeds a preset threshold as target driving scenes, the target driving scenes include at least two driving scenes; and a second determining unit, configured to determine a difference between the test results respectively corresponding to the target driving scenes.

Optionally, the second determining unit includes: a first determining module, configured to determine the difference between the test results respectively corresponding to the target driving scenes based on different driving system versions; and a second determining module, configured to determine the difference between the test results respectively corresponding to the target driving scenes based on different cities..

According to yet another aspect of the present invention, there is provided a computer-readable storage medium having computer instructions stored thereon. The computer instructions are configured to cause a computer to implement the test method for automatic driving provided by the above aspect of the present invention.

According to yet another aspect of the present invention, there is provided a computer program product including computer programs. When the computer programs are executed by a processor, the test method for automatic driving provided by the above aspect of the present invention is implemented.

According to the test method and the test apparatus for automatic driving, the storage medium, and the computer program product provided by the present invention, after obtaining the driving data of the automatic driving vehicle, the at least one driving scene contained in the driving data is determined according to the driving data and the preset scene analysis strategy, each of the at least one driving scene includes the at least one type of indicator parameter information, the automatic driving vehicle is tested according to respective types of indicator parameter information in the at least one driving scene. Therefore, compared with the related art, the embodiments of the present invention utilize the real vehicle driving data of the automatic driving vehicle. By analyzing the real vehicle driving data to complete the test, the test process is simplified, and the test cost is greatly reduced.

It should be understood that the content described in this section is not intended to identify key or important features of the embodiments of the present invention, nor is it intended to limit the scope of the present invention. Additional features of the present invention will be easily understood based on the following description.

### BRIEF DESCRIPTION OF THE DRAWINGS

The drawings are used to better understand the solution and do not constitute a limitation to the present invention, in which:
FIG. 1 is a flowchart of a test method for automatic driving provided by an embodiment of the present invention.
FIG. 2 is a schematic diagram of a test method for automatic driving provided by an embodiment of the present invention.
Fig. 3 is a block diagram of a test apparatus for automatic driving provided by an embodiment of the present invention.
Fig .4 is a block diagram of a test apparatus for automatic driving provided by another embodiment of the present invention.
Fig. 5 is a block diagram of an electronic device provided by an embodiment of the present invention.

### DETAILED DESCRIPTION

Embodiments of the present invention are described below with reference to the accompanying drawings, including various details of the embodiments of the present invention to facilitate understanding, which shall be considered illustrative. Therefore, those of ordinary skill in the art should recognize that various changes and modifications can be made to the embodiments described herein without departing from the scope of the present invention. For clarity and conciseness, descriptions of well-known functions and structures are omitted in the following description.

In the related art, multiple test vehicles are used to pass circularly through a same place, and a scene of passing through the place is recorded. When the scene meets special test requirements, it will be recorded as a valid test scene (such as the scene in which left turning encounters a straight driving). Performances of vehicle versions are observed under the valid test scene. Usually, it needs a lot of tests to accumulate the number of valid scenes that meet the requirements, so as to get an effective test conclusion. This test method is complex and does not depend on real vehicle data.

In the present invention, with the aid of data mining technology, it is possible to perform scene mining, scene clustering, and indicator extraction on road test data to achieve a test method based on real vehicle driving data, so as to improve the accuracy of the test by using real vehicle driving data, and the implementation of data analysis is simple.

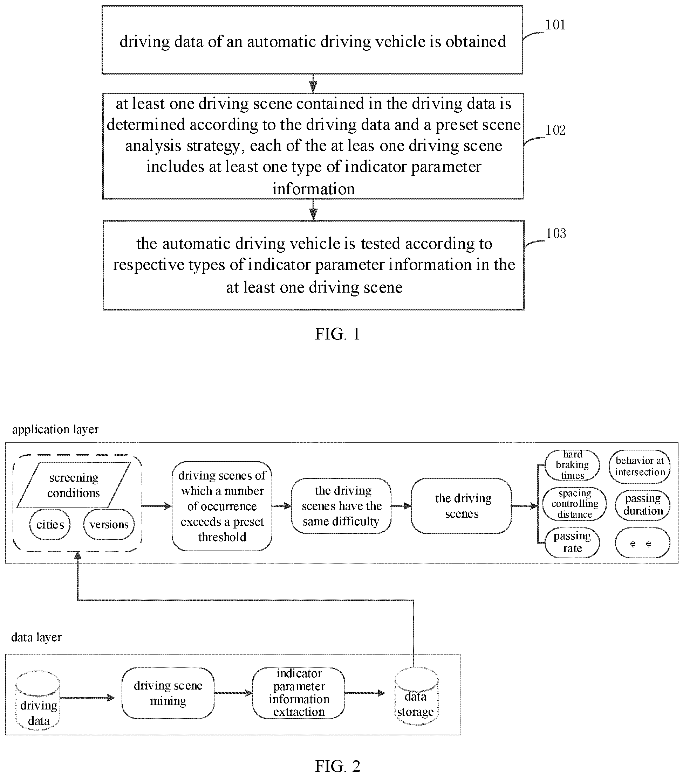

FIG. 1 is a flowchart of a test method for automatic driving provided by an embodiment of the present invention.

As illustrated in Fig. 1, the method includes the following steps.

In step 101, driving data of an automatic driving vehicle is obtained.

The driving data refers to real vehicle data generated in the process of automatic driving, including but not limited to at least one of: driving data, perceived surrounding obstacle data, and interaction data between automatic driving vehicle and obstacle. The driving data includes but is not limited to positioning data (map data) and path data of the automatic driving vehicle, and control data for the automatic driving vehicle. The perceived surrounding obstacle data includes an obstacle category, an obstacle position and an obstacle speed (for example, the obstacle category is a dynamic obstacle such as driving vehicle, or a static obstacle such as road signs, intersections, etc.). The interaction data between automatic vehicle and obstacle, including for example a relative distance, relative speed, relative distance/relative speed of a vehicle in front (i.e. Time-To-Collision, TTC) and relative distance/speed of a rear vehicle.

The types of driving data are illustrated above, but it should be clear that the above is only for example, and in practical application, the driving data includes all the operating data for the vehicle and various data collected through the on-board camera (or recorder) during the driving process of the automatic driving vehicle.

In step 102, at least one driving scene contained in the driving data is determined according to the driving data and a preset scene analysis strategy, each of the at least one driving scene includes at least one type of indicator parameter information.

The preset scene analysis strategy is preset strategy information, which mainly includes categories of driving scenes and the indicator parameter information corresponding to each driving scene.

To facilitate understanding, the following examples illustrate the preset scene analysis strategy. The driving scenes include but are not limited to starting at an intersection, spacing controlling at an intersection, turning right at an intersection, turning left at an intersection, going straight at an intersection, turning around at an intersection, changing lane, and response to a cutting-in vehicle. Each driving scene is further divided into different indicator parameter information, as shown in Table 1.

**Table 1**

| driving scenes | indicator parameter information | | |
|---|---|---|---|
| starting at an intersection | starting acceleration | starting reaction time | starting speed variance |
| spacing controlling at an intersection | distance from the vehicle ahead for spacing controlling | coasting distance of spacing controlling | distance from the stop line for spacing controlling |
| turning right at an intersection | average time of right turning | average speed of right turning | passing rate of right turning |
| turning left at an | average time of left | average speed of | passing rate of left |

| intersection | turning | left turning | turning |
|---|---|---|---|
| going straight at an intersection | time for passing through the intersection | average speed at the intersection | passing rate at the intersection |
| turning around at an intersection | time for turning around at the intersection | speed for turning around at the intersection | passing rate at the intersection |
| lane change | lane change backward distance | lane change length | lane change backward TTC |
| response to a cutting-in vehicle | cutting-in vehicle speed variance | forward TTC for the cutting-in vehicle | transverse/longitudinal distance from the cutting-in vehicle |

It should be noted that the above examples are only for the convenience of understanding. They are the situations that may occur in normal driving. The embodiments of the present invention do not specifically define the driving scenes and corresponding indicator parameter information, but can be flexibly set according to different application scenes and different models of automatic driving vehicles.

The above describes the preset scene analysis strategy. When analyzing and mining driving scene based on this preset scene analysis strategy, the driving scene is analyzed and mined according to the high-precision map information, vehicle control data, and the positional relationship transformation between the main vehicle (automatic driving vehicle) and obstacles contained in the driving data.

In step 103, the automatic driving vehicle is tested according to respective types of indicator parameter information in the at least one driving scene.

The test needs a comparison with reference data. In the embodiment of the present invention, the reference data can be corresponding reference data that is set for each type of indicator parameter information, or can be reference data for testing between different vehicles. For example, there are two testing automatic driving vehicles A and B, a road section of the automatic driving vehicle A and a road section of the automatic driving vehicle B are the same during the test, after obtaining the indicator parameter information under the driving scene through the above method, the indicator parameter information of the automatic driving vehicle A is compared respectively with the indicator parameter information of the automatic driving vehicle B, and the test is completed. The embodiment of the present invention does not limit the reference data compared during the test.

In order to solve the problems of the automatic driving road test in the related art, the embodiment of this application can perform the scene mining, driving scene analysis, and indicator parameter information extraction on road test data (driving data) with the aid of data mining technology, to achieve a data based road specific testing method. The embodiment of the present invention changes the test mode driven by effective scene of real vehicle in the related art to a data driven test mode, which can efficiently perform special tests by virtue of the advantages of data mining and analysis.

According to the test method for automatic driving provided by the present invention, after obtaining the driving data of the automatic driving vehicle, the at leas one driving scene contained in the driving data is determined according to the driving data and the preset scene analysis strategy, each of the at least one driving scene includes the at least one type of indicator parameter information, the automatic driving vehicle is tested according to respective types of indicator parameter information in the at least one driving scene. Therefore, compared with the related art, the embodiment of the present invention utilizes the real vehicle driving data of the automatic driving vehicle. By analyzing the real vehicle driving data to complete the test, the test process is simplified, and the test cost is greatly reduced.

As a further specification of the above embodiment, when performing the step 102 of determining the at least one driving scene contained in the driving data according to the driving data and the preset scene analysis strategy, it may be adopted but not limited to a mode of : analyzing the driving data to obtain path information, vehicle control information and obstacle information; determining scene start time, scene end time and obstacle information in the at least one driving scene according to the path information, vehicle control information, obstacle information and the preset scene analysis strategy; and determining the at least one driving scene in the driving data based on the scene start time, the scene end time, and the obstacle information.

As an example, the driving data contains at least two driving scenes. For example, after the automatic driving vehicle starts, it successively turns right, passes an intersection with traffic light, changes lanes, turns around at an intersection, and then the automatic driving vehicle stops. Through data analysis, it can be determined that there are 4 driving scenes, including: turning right at an intersection, going straight at an intersection, lane change, and turning around at an intersection. Each driving scene in the driving data records the scene start time, scene end time and obstacle information.

For each driving scene, the indicator parameter information representing the scene is determined. The indicator parameter information corresponding to different driving scenes is different, so as to characterize the different driving scenes. The effect of driving scene processing is evaluated through the change of indicator parameter information, to realize the evaluation of automatic driving ability in different scenes.

Testing the automatic driving vehicle according to respecitve types of indicator parameter information in the at least one driving scene includes: determining a scene category of each type of indicator parameter information in the at least one driving scene, the scene category is related to at least one of vehicle speed, passing rate/passing duration, distance to obstacle, and lane; determining a target calculation method of the indicator parameter information according to the scene category; and testing the automatic driving vehicle based on the target calculation method. The scene category is closely related to the indicator parameter information. For example, when the driving scene is starting at an intersection, the scene category is related to the vehicle speed and passing duration; when the driving scene is turning right at an intersection, the scene category is related to the passing duration and passing rate. For the correlation between the scene category and the indicator parameter information, please refer to Table 1 for details.

The purpose of determining the scene category is to determine different target calculation methods according to different scene categories. For example, when the driving scene is related to speed, the speed in its corresponding indicator parameter information is to be calculated; when the driving scene is related to duration, the duration in its corresponding indicator parameter information is to be calculated.

In practical application, the analysis of the driving scene described in the above embodiment is implemented in the data layer, that is, the data layer is used for driving data acquisition, driving scene mining, indicator parameter information mining, testing, and storage. In order to increase its applicability, an application layer can also be set to apply result data of the test. As shown in Fig. 2, which is the schematic diagram of a test method for automatic driving provided by an embodiment of the present invention.

As an extension, the present invention layer, based on the test result data stored in the data layer, removes test variables caused by different scene locations and driving scenes with different difficulties, analyzes the driving scene occurred in high frequency at a fixed location, and outputs the test results according to versions to obtain version differences, and/or outputs the test results according to cities to obtain city differences. Specifically, the method further includes: generating data groups based on the at least one driving scene and corresponding test results, the data groups are stored according to a driving scene dimension; analyzing at least two data groups, and determining driving scenes of which a number of occurrence exceeds a preset threshold as target driving scenes, the target driving scenes include at least two driving scenes; determining a difference between the test results respectively corresponding to the target driving scenes.

In practical application, when generating the data group, except the driving scene and corresponding test result, the data group also includes information such as the result of indicator parameter information extraction, driving scene description information, original driving data, test version, automatic driving vehicle, and scene location. The specific contents contained in the data group are not limited in the embodiments of the present invention.

In the embodiment of the present invention, during the test, the driving scene is taken as the dimension for analysis. As a realizable application mode, the same driving behavior data at the same intersection based on different versions can be processed to obtain a version ability difference, that is, based on different driving system versions, the difference between the test results respectively corresponding of the target driving scenes is determined.

Based on different cities, the difference between the test results respectively corresponding to the target driving scenes is determined. The adaptability of the automatic driving can be obtained from the performance difference of the same version in different cities, so as to achieve the quantification of the automatic driving road test and develop the data potential.

In practical application, in order to ensure the accuracy of the test, the same software version is applied at different driving scene locations, which may cause differences in driving data, for example the time for passing intersections of different sizes is in great difference. However, this difference cannot characterize the change of version ability. In order to eliminate the difference, the embodiment of the present invention can select a fixed location to evaluate different versions.

Even if the driving scenes occur in the same place, there are differences in effectiveness. The automatic driving ability varies greatly with respect to driving scenes of different difficulties. In order to ensure the accuracy of the test results, the test needs to be performed when the driving scenes have the same difficulty.

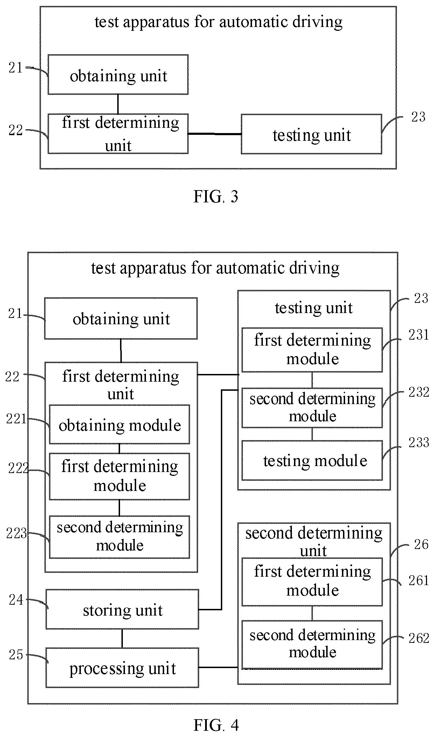

Fig. 3 is a block diagram of a test apparatus for automatic driving provided by an embodiment of the present invention. As shown in Fig. 3, the apparatus includes an obtaining unit 21, a first determining unit 22, and a testing unit 23.

The obtaining unit 21 is configured to obtain driving data of an automatic driving vehicle.

The first determining unit 22 is configured to determine at least one driving scene contained in the driving data according to the driving data and a preset scene analysis strategy, each of the at least one driving scene includes at least one type of indicator parameter information.

The testing unit 23 is configured to test the automatic driving vehicle according to respective types of indicator parameter information in the at least one driving scene.

According to the test apparatus for automatic driving provided by the present invention, after obtaining the driving data of the automatic driving vehicle, the at least one driving scene contained in the driving data is determined according to the driving data and the preset scene analysis strategy, each of the at least one driving scene includes the at least one type of indicator parameter information, the automatic driving vehicle is tested according to respective types of indicator parameter information in the at least one driving scene. Therefore, compared with the related art, the embodiment of the present invention utilizes the real vehicle driving data of the automatic driving vehicle. By analyzing the real vehicle driving data to complete the test, the test process is simplified, and the test cost is greatly reduced.

Further, in a possible implementation of the embodiment of the present invention, as shown in Fig. 4, the first determining unit 22 includes an obtaining module 221, a first determining module 222, and a second determining module 223.

The obtaining module 221 is configured to analyze the driving data to obtain path information, vehicle control information and obstacle information.

The first determining module 222 is configured to determine scene start time, scene end time and obstacle information in the at least one driving scene according to the path information, vehicle control information, obstacle information and preset scene analysis strategy.

The second determining module 223 is configured to determine at least one driving scene in the driving data based on the scene start time, the scene end time, and the obstacle information.

Further, in a possible implementation of the embodiment of the present invention, as shown in Fig. 4, the testing unit 23 includes a first determining module 231, a second determining module 232, and a testing module 233.

The first determining module 231 is configured to determine a scene category of each type of indicator parameter information in at least one driving scene, the scene category is related to at least one of vehicle speed, passing rate/passing duration, distance to obstacle, and lane.

The second determining module 232 is configured to determine a target calculating apparatus of the indicator parameter information according to the scene category.

The testing module 233 is configured to test the automatic driving vehicle based on the target calculating apparatus.

Further, in a possible implementation of the embodiment of the present invention, as shown in Fig. 4, the apparatus further includes a storing unit 24, a processing unit 25, and a second determining unit 26.

The storing unit 24 is configured to, after the testing unit tests the automatic driving vehicle according to the respective types of indicator parameter information in the at least one driving scene, generate data groups based on the at least one driving scene and corresponding test results, and store the data groups according to a driving scene dimension.

The processing unit 25 is configured to analyze at least two data groups, and determine the driving scenes of which a number of occurrence exceeds a preset threshold as target driving scenes, the target driving scenes include at least two driving scenes.

The second determining unit 26 is configured to determine a difference between the test results respectively corresponding to the target driving scenes.

Further, in a possible implementation of the embodiment of the present invention, as shown in Fig. 4, the second determining unit 26 includes a first determining module 261 and a second determining module 262.

The first determining module 261 is configured to determine the difference between the test results respectively corresponding to the target driving scenes based on different driving system versions.

The second determining module 262 is configured to determine the difference between the test results respectively corresponding to the target driving scenes based on different cities.

It should be noted that the foregoing explanation of the method embodiment is also applicable to the apparatus of this embodiment, with the same principle, and is not limited in this embodiment.

According to the embodiments of the present invention, the present invention also provides an electronic device, a readable storage medium and a computer program product.

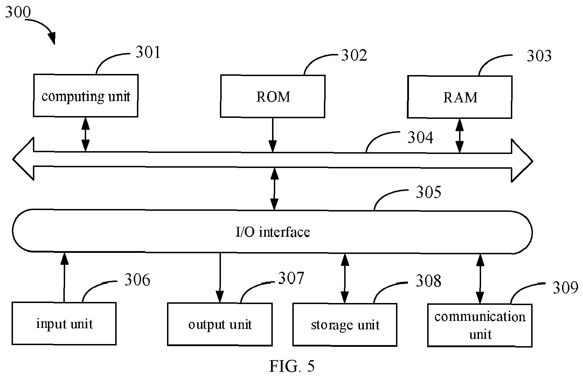

FIG. 5 is a block diagram of an example electronic device 300 used to implement embodiments of the present invention. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the present invention described and/or required herein.

As illustrated in FIG. 5, the device 300 includes a computing unit 301 performing various appropriate actions and processes based on computer programs stored in a read-only memory (ROM) 302 or computer programs loaded from a storage unit 308 to a random access memory (RAM) 303. In the RAM 303, various programs and data required for the operation of the device 300 are stored. The computing unit 301, the ROM 302, and the RAM 303 are connected to each other through a bus 304. An input/output (I/O) interface 305 is also connected to the bus 304.

Components in the device 300 are connected to the I/O interface 305, including: an input unit 306, such as a keyboard, a mouse; an output unit 307, such as various types of displays, speakers; a storage unit 308, such as a disk, an optical disk; and a communication unit 309, such as network cards, modems, and wireless communication transceivers. The communication unit 309 allows the device 300 to exchange information/data with other devices through a computer network such as the Internet and/or various telecommunication networks.

The computing unit 301 may be various general-purpose and/or dedicated processing components with processing and computing capabilities. Some examples of computing unit 301 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 301 executes the various methods and processes described above, such as the method for fusing road data to generate a map. For example, in some embodiments, the method for fusing road data to generate a map may be implemented as a computer software program, which is tangibly contained in a machine-readable medium, such as the storage unit 308. In some embodiments, part or all of the computer program may be loaded and/or installed on the device 300 via the ROM 302 and/or the communication unit 309. When the computer program is loaded on the RAM 303 and executed by the computing unit 301, one or more steps of the method described above may be executed. Alternatively, in other embodiments, the computing unit 301 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or their combination. These various implementations may be realized in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the present invention may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the present invention, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor) for displaying information to a user; and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or includes such background components, intermediate computing components, or any combination of front-end components. The components of the system may be interconnected by any form or medium of digital data communication (e.g., a communication network). Examples of communication networks include: local area network (LAN), wide area network (WAN), the Internet and the block-chain network.

The computer system may include a client and a server. The client and server are generally remote from each other and interacting through a communication network. The client-server relation is generated by computer programs running on the respective computers and having a client-server relation with each other. The server may be a cloud server, a server of distributed system or a server combined with block-chain.

It should be noted that artificial intelligence (AI) is a discipline that enables computers to simulate certain human thinking processes and intelligent behaviors (such as learning, reasoning, thinking, planning, etc.), including both hardware and software technologies. AI hardware technologies generally include technologies such as sensors, special AI chips, cloud computing, distributed storage, big data processing; AI software technology mainly includes computer vision technology, speech recognition technology, natural language processing technology, machine learning/deep learning, big data processing technology, knowledge mapping technology and other major directions.

It should be understood that the various forms of processes shown above can be used to reorder, add or delete steps. For example, the steps described in the present invention could be performed in parallel, sequentially, or in a different order, as long as the desired result of the technical solution disclosed in the present invention is achieved, which is not limited herein.

The above specific embodiments do not constitute a limitation on the protection scope of the present invention. Those skilled in the art should understand that various modifications, combinations, sub-combinations and substitutions can be made according to design requirements and other factors. Any modification, equivalent replacement and improvement made within the principle of the present invention shall be included in the protection scope of the present invention.

## Claims

1. A test method for automatic driving, comprising:
obtaining (101) driving data of an automatic driving vehicle;
determining (102) at least one driving scene contained in the driving data according to the driving data and a preset scene analysis strategy, each of the at least one driving scene comprising at least one type of indicator parameter information; and
testing (103) the automatic driving vehicle according to respective types of indicator parameter information in the at least one driving scene.

2. The test method according to claim 1, wherein determining the at least one driving scene contained in the driving data according to the driving data and the preset scene analysis strategy comprises:
analyzing the driving data to obtain path information, vehicle control information and obstacle information;
determining scene start time, scene end time and obstacle information in the at least one driving scene according to the path information, vehicle control information, obstacle information and preset scene analysis strategy; and
determining the at least one driving scene in the driving data based on the scene start time, the scene end time, and the obstacle information.

3. The test method according to claim 1 or 2, wherein testing the automatic driving vehicle according to respective types of indicator parameter information in the at least one driving scene comprises:
determining a scene category of each type of indicator parameter information in at least one driving scene, wherein the scene category is related to at least one of vehicle speed, passing rate/passing duration, distance to obstacle, and lane;
determining a target calculation method of the indicator parameter information according to the scene category; and
testing the automatic driving vehicle based on the target calculation method.

4. The test method according to any one of the preceding claims, wherein after testing the automatic driving vehicle according to respective types of indicator parameter information in the at least one driving scene, the method further comprises:
generating data groups based on the at least one driving scene and corresponding test results, wherein the data groups are stored according to a driving scene dimension;
analyzing at least two data groups, and determining the driving scenes of which a number of occurrence exceeds a preset threshold as target driving scenes, wherein the target driving scenes comprise at least two driving scenes; and
determining a difference between the test results respectively corresponding to the target driving scenes.

5. The test method according to claim 4, wherein determining the difference between the test results respectively corresponding to the target driving scenes comprises:
determining the difference between the test results respectively corresponding to the target driving scenes based on different driving system versions; or
determining the difference between the test results respectively corresponding to the target driving scenes based on different cities.

6. A test apparatus for automatic driving, comprising:
an obtaining unit (21), configured to obtain driving data of an automatic driving vehicle;
a first determining unit (22), configured to determine at least one driving scene contained in the driving data according to the driving data and a preset scene analysis strategy, each of the at least one driving scene comprising at least one type of indicator parameter information; and
a testing unit (23), configured to test the automatic driving vehicle according to respective types of indicator parameter information in the at least one driving scene.

7. The test apparatus according to claim 6, wherein the first determining unit (22) comprises:
an obtaining module (221), configured to analyze the driving data to obtain path information, vehicle control information and obstacle information;
a first determining module (222), configured to determine scene start time, scene end time and obstacle information in the at least one driving scene according to the path information, vehicle control information, obstacle information and preset scene analysis strategy; and
a second determining module (223), configured to determine the at least one driving scene in the driving data based on the scene start time, the scene end time, and the obstacle information.

8. The test apparatus according to claim 6 or 7, wherein the testing unit (23) comprises:
a first determining module (231), configured to determine a scene category of each type of indicator parameter information in at least one driving scene, wherein the scene category is related to at least one of vehicle speed, passing rate/passing duration, distance to obstacle, and lane;
a second determining module (232), configured to determine a target calculating apparatus of the indicator parameter information according to the scene category; and
a testing module (233), configured to test the automatic driving vehicle based on the target calculating apparatus.

9. The test apparatus according to any one of the preceding claims 6-8, further comprising:
a storing unit (24), configured to, after the testing unit tests the automatic driving vehicle according to respective types of indicator parameter information in the at least one driving scene, generate data groups based on the at least one driving scene and corresponding test results, and store the data groups according to a driving scene dimension;
a processing unit (25), configured to analyze at least two data groups, and determine the driving scenes of which a number of occurrence exceeds a preset threshold as target driving scenes, wherein the target driving scenes comprise at least two driving scenes; and
a second determining unit (26), configured to determine a difference between the test results respectively corresponding to the target driving scenes.

10. The test apparatus according to claim 9, wherein the second determining unit (26) comprises:
a first determining module (261), configured to determine the difference between the test results respectively corresponding to the target driving scenes based on different driving system versions; and
a second determining module (262), configured to determine the difference between the test results respectively corresponding to the target driving scenes based on different cities.

11. A computer-readable storage medium having computer instructions stored thereon, wherein the computer instructions are configured to cause a computer to implement the method of any one of claims 1-5.

12. A computer program product comprising computer programs, wherein when the computer programs are executed by a processor, the method of any one of claims 1-5 is implemented.
